# EUROPÄISCHE PATENTSCHRIFT

(11) **EP 3 749 878 B1**
(45) Veröffentlichungstag und Bekanntmachung des Hinweises auf die Patenterteilung: **23.03.2022**
(21) Anmeldenummer: 19703238.6
(22) Anmeldetag: 04.02.2019
(51) Int. Cl.: E04H 9/02, F03D 1/00, F16F 15/18, F16F 7/10

(54) **ROTATIONS-SCHWINGUNGSTILGER MIT RIEMENANTRIEB**
ROTARY VIBRATION ABSORBER WITH BELT DRIVE
AMORTISSEUR DE VIBRATIONS ROTATIF AVEC ENTRAÎNEMENT PAR COURROIE

(30) Priorität: 08.02.2018 EP 18000115
(43) Veröffentlichungstag der Anmeldung: 16.12.2020
(73) Patentinhaber: ESM Energie- und Schwingungstechnik Mitsch GmbH, 64646 Heppenheim (DE)
(72) Erfinder: MITSCH, Franz, 64646 Heppenheim (DE); FRITZ, Florian, 64668 Rimbach (DE)
(74) Vertreter: Benz, Jürgen
(86) Internationale Anmeldenummer: PCT/EP2019/000032
(87) Internationale Veröffentlichungsnummer: WO 2019/154557

(56) Entgegenhaltungen:
- EP-A1- 0 722 870
- WO-A1-2012/121694
- WO-A1-2017/036581
- JP-U- H0 233 947

## Beschreibung

Die Erfindung betrifft einen Schwingungstilger für die Dämpfung von Schwingungen, wie sie beispielsweise in Windkraftanlagen oder auch anderen hohen schlanken Bauwerken oder Anlagen auftreten können.

Die Erfindung betrifft insbesondere einen Schwingungstilger, welcher neben einer an sich festeingestellten Hauptmasse, die entlang einer gekrümmten Bahn, mittels eines Laufwerkes bewegt wird, ähnlich der Bewegung eines Pendels, zusätzlich eine wesentlich kleinere variabel einstellbare rotierende Schwungmasse aufweist, die sich mit der Hauptmasse auf deren Bahn bewegt und mit deren Hilfe die Frequenz des Tilgers fein eingestellt bzw. adaptiert werden kann.

Die Erfindung betrifft insbesondere einen entsprechenden Rotations-Schwingungstilger, bei dem die Rotationsschwungmasse unabhängig vom Laufwerk mittels einer neuartigen Riemenvorrichtung angetrieben wird.

Die Erfindung betrifft ferner auch solche Rotations-Schwingungstilgern, welche neben der Dämpfung durch die Rotationsschwungmasse eine weitere Dämpfungseinheit, wie beispielsweise eine Wirbelstromdämpfung, aufweisen.

Hohe und schlanke Gebäude und Anlagen unterliegen besonderen Schwingungsverhältnissen, welche durch technische Maßnahmen beachtet werden müssen, damit keine Schäden oder vorzeitige Ermüdungsprozesse eintreten. Dies gilt insbesondere für Windkraftanlagen, die aufgrund ihrer rasanten technischen Weiterentwicklung in den letzten Jahren vermehrt auch in extremeren Gegenden (z.B. Offshore) und Höhen eingesetzt werden, und zudem immer höhere Türme aufweisen, um die dort besseren Windverhältnisse auszunutzen. Solche Windkraftanlagen müssen den an ihnen durch Wind, Wellen, Wetter und Betrieb auftretenden Kräften Stand halten, welche die Anlagen an unterschiedlichen Stellen verschieden stark belasten. Insbesondere Schwingungskräfte können den Betrieb und die Sicherheit der Anlagen gefährden. Es ist also notwendig die in diesen Anlagen auftretenden Schwingungen durch technische Maßnahmen gezielt und wirksam zu dämpfen. Dies geschieht mit Schwingungstilgern oder Schwingungsdämpfern unterschiedlicher Konstruktion entsprechend der diversen unterschiedlichen Einsatzfelder.

Pendeltilger für Windkraftanlagen sind beispielsweise in der EP 1008747 (B1) oder in der WO 2009/068599 beschrieben. Hier werden klassische Pendel verwendet, welche aber auf Grund des verfügbaren geringen Bewegungsraumes im Turm nur kleine Schwingwege zurücklegen können, was zur Folge hat, dass die erforderlichen Tilgermassen recht groß sein müssen, um Einfluss auf die entsprechende Eigenfrequenz nehmen zu können.

Aus der JP 08-200438 (A) ein Schwingungstilger bekannt, welcher eine Tilgemasse umfasst, die mit Rollen ausgestattet ist und auf diesen auf einer konkav nach innen gekrümmten kreisförmigen Schienenanordnung hin und her rollen kann, wobei sich die Masse de facto wie die Masse eines virtuellen Pendels mit einer dem Kreisradius entsprechenden Pendelstange oder Pendelseil bewegt. Während die grobe Einstellung auf die Eigenfrequenz durch die grobe Konfiguration des Systems (Masse, Schienenausmaße, Länge etc.) festgelegt wird, kann eine Feinabstimmung der Eigenfrequenz bei diesem System nur durch Veränderung der der Schienenkrümmung erfolgen, was technisch sehr aufwendig sein dürfte, und in manchen Fällen gar nicht möglich ist.

In der EP 2746483 (A1) wird ein ebenfalls einer Pendelbewegung nachempfundener Rolltiger für eine Windkraftanlage vorgestellt, bei dem eine ggf. variable Tilgermasse auf einer Rad-Schienen-Anordnung aus einer Mittellage heraus durch Rückstellkräfte, insbesondere Federkräfte, verlagerbar ist. Die Tilgermasse-Schienen-Anordnung ist dabei innerhalb eines umgebenden Rahmengestells angeordnet, wobei die vorgesehene Höhenverstellung in diesem Gestell für die gewünschte Feinabstimmung der Frequenz sorgt, da die Höhenverstellung physikalisch einer Veränderung der Länge des virtuellen Pendels bewirkt.

In der WO 2017/036581 wird ein insbesondere für Windkraftanlagen entwickelter Schwingungstilger vorgeschlagen, der ein Lauf- oder Fahrwerk, eine Tilger-Hauptmasse und eine Laufvorrichtung aufweist, wobei die Tilger-Hauptmasse am Fahrwerk angebracht ist oder integraler Bestandteil davon ist, und die Laufvorrichtung konkav oder kreisförmig gekrümmt ist, und das Fahrwerk bzw. die Tilger-Hauptmasse auf der Laufvorrichtung aus einer Mittellage oder Scheitelpunktlage heraus mittels Räder oder Rollen bewegbar ist entsprechend den die Bewegungen auslösenden, in Richtung der Laufvorrichtung wirksamen Schwingungskräften. Dabei weist das Lauf- oder Fahrwerk bzw. die Tilger-Hauptmasse eine scheibenförmige, rotationssymmetrische, ggf. variabel einstellbare Schwungmasse auf, die nur einen Bruchteil der Hauptmasse des Schwingungstilgers ausmacht, eine Rotationsachse senkrecht zur Ebene der gekrümmten Bahn der Laufvorrichtung aufweist, und sich zusammen mit der Tilger-Hauptmasse auf der Laufvorrichtung auf Rädern oder Rollen bewegt. Die Rotationsschwungmasse wird dabei von mindestens einem Antriebsrad angetrieben, welches sich auf der Schienen-Laufvorrichtung zusammen mit den anderen Führungsrädern bewegt. Grundidee dieses Tilgers ist es, kleine Massen durch große Schwingwege zu ermöglichen. Während Schwingungstilger in bisherigen Türmen Schwingwege von etwa nur 300 - 500 mm erreichen, können mit dem beschriebenen Tilger Schwingwege von mehr als 3000 - 5000 mm realisiert werden. Dies bedeutet, dass bei etwa 10 - fachen Schwingweg die erforderliche Masse auf etwa 1/10 reduziert werden kann, was per se ein Vorteil ist.

Die bei der Bewegung der Rotationsschwungmasse aufzubringenden Kräfte werden durch Reibung der Rollen oder Räder auf die Laufvorrichtung (Schienen oder Rohre) übertragen, und somit auch auf das Antriebsrad, bzw. die Antriebsräder. Dadurch kann es insbesondere bei feuchter, öliger oder vereister Laufvorrichtung oder vereisten, feuchten oder öligen Rädern bzw. Rollen vorkommen, dass insbesondere das Antriebsrad der Rotationsschwungmasse auf der Laufvorrichtung durchdreht oder rutscht, was sich negativ auf den gewünschte Dämpfungseffekt auswirkt. In der WO 2017/036581 wird daher, um diesem Problem zu begegnen, unter anderem vorgeschlagen, das Antriebsrad / die Antriebsräder mit einem Material mit hohem Reibungswert zu beschichten oder aber die Lauffläche der Schienen und die Räder mit einem Zahnprofil auszustatten.

Es hat sich nun gezeigt, dass selbst der Einsatz solcher oder ähnlicher Materialien und Profile auf Laufvorrichtung und Rädern bei starker Nässe oder signifikanten Eisansatz nicht ausreicht, um die Schwungscheibe mit der Magnetdämpfer mit ausreichendem Drehmoment anzutreiben. Überdies wurde festgestellt, dass der Einsatz der genannten Maßnahmen bei normalen Bedingungen nicht nur verschleißanfällig ist, sondern auch zu erschwerter Feinabstimmung der gewünschten oder notwendigen Eigenfrequenzen führen kann.

Es bestand somit die Aufgabe, den in der WO 2017/036581 vorgeschlagenen insbesondere bei normalen Witterungsbedingungen sehr effektiven Rotations-Schwingungstilger, in der Weise zu verbessern, dass die geschilderten Nachteile, insbesondere bei nassen Bedingungen und bei Eisbildung, nicht mehr auftreten.

### Zusammenfassung der Erfindung:

Die gestellte Aufgabe konnte dadurch gelöst werden, dass das mindestens eine Antriebsrad der Rotationsschwungmasse aus der WO 2017/036581 unabhängig von den anderen auf der Laufvorrichtung bewegten Führungsrädern oder Führungsrollen des Fahrwerkes, angetrieben wird.

Gegenstand der Erfindung ist somit ein variabel an eine Störfrequenz anpassbarer Schwingungstilger, einsetzbar in Windkraftanlagen, Bauwerken, Maschinen der Anlagen mit vergleichbarer Schwingungscharakteristik, umfassend ein mit Laufrollen (2.1) ausgestattetes Fahrwerk (2), eine Tilger-Hauptmasse (5) und eine Laufvorrichtung (1), wobei (i) die Tilger-Hauptmasse (5) am Fahrwerk angebracht ist oder integraler Bestandteil des Fahrwerks ist, (ii) die Laufvorrichtung (1) für das Fahrwerk (2) im Wesentlichen in der Weise kreisförmig oder konkav gekrümmt ist, dass das Fahrwerk bzw. die Tilger-Hauptmasse (5) auf dieser Laufvorrichtung aus einer Mittellage oder Scheitelpunktlage heraus bewegbar und verlagerbar ist entsprechend den die Bewegungen auslösenden, in Richtung der Laufvorrichtung wirksamen Schwingungskräften, (iii) das Fahrwerk (2) bzw. die Tilger-Hauptmasse (5) mindestens eine scheibenförmige, rotationssymmetrische angetriebene Rotationsschwungmasse (6) mit einer Rotationsachse senkrecht zur Ebene der Kreisbahn der Laufvorrichtung aufweist, und sich zusammen mit der Tilger-Hauptmasse (5) bewegt, und (iv) die mindestens eine Rotationsschwungmasse (6) mindestens eine rotierende Massenscheibe umfasst und eine Rotationsrichtung aufweist, die im Wesentlichen der jeweiligen Richtung des bewegten Fahrwerks entlang der Laufvorrichtung entspricht, wobei die scheibenförmige Rotationsschwungmasse (6) von einer Riemenantriebsvorrichtung (7) ohne nennenswerte wirksame Beteiligung der Laufrollen (2.1) des Fahrwerks (2) angetrieben wird, die Riemenantriebsvorrichtung unterhalb der Laufvorrichtung (1) angebracht ist und der Schwerpunkt der mit der Riemenantriebsvorrichtung verbundenen Rotationsschwungmasse (6) unterhalb der Laufvorrichtung (1) liegt.

Erfindungsgemäß bewegt sich das mindestens eine Antriebsrad der Rotationsschwungmasse des Schwingungstilgers nicht mehr auf einer Laufschiene sondern auf einem Laufriemen unterhalb der gekrümmten Laufvorrichtung, bzw. den gekrümmten Laufschienen. Die Positionierung des Schwerpunktes der Rotationsschwungmasse unterhalb der Laufvorrichtung ist dabei essentiell für die gefundenen vorteilhaften Eigenschaften des erfindungsgemäßen Schwingungstilgers.

Es wurde nämlich überraschenderweise gefunden, dass die Dämpfungseigenschaften, inklusive Feinabstimmung der Frequenzen des Tilgers, bei Verwendung eines solchen Riemenantriebes selbst bei schwierigen Witterungsbedingungen (Nässe, Eis) ausgezeichnet sind und denen bei normalen Betriebsbedingungen des Schwingungstilgers nicht nachstehen.

Überdies zeigt sich der erfindungsgemäße Riemenantrieb überraschenderweise weit weniger verschleißanfällig als die in der WO 2017/036581 beschriebenen Zahnriemenlösung für die Laufschienen und die Räder.

Ohne sich auf eine Theorie festlegen zu wollen, wird angenommen, dass nicht nur die Entkopplung des Antriebes der Rotationsschwungmasse von dem Antrieb der Lauf- und Führungsräder auf den Laufschienen sich vorteilhaft auf die genannten Eigenschaften auswirkt, sondern auch die Tatsache, dass sich der Schwerpunkt der Rotationsmasse und damit auch der gesamten Masse des Fahrwerks (inklusive Hauptmasse des Tilgers) tiefer liegt im Vergleich zur Laufvorrichtung. Der Schwerpunkt der Rotationsmasse befindet sich bei dem hier beschriebenen erfindungsgemäßen Riemenantrieb also unterhalb der Laufschienen im Unterschied zur WO 2017/036581.

Die Riemenantriebsvorrichtung (7) umfasst dabei einen gespannten Laufriemen (7.2), mindestens ein Antriebsrad (7.1) und eine Riemenauflage (7.3), die im Wesentlichen die Krümmung der Laufvorrichtung (1) aufweist und unterhalb derselben über ihre gesamte Länge angebracht ist. Die Rotationsschwungmasse (6) wird dabei durch das Antriebsrad (7.1) angetrieben, welches sich auf dem Laufriemen (7.2) unterhalb der Riemenauflage (7.3) hin und her bewegt, entsprechend der über die Laufrollen (2.1) bewerkstelligten Bewegung des Fahrwerks (2) auf der Laufvorrichtung (1).

In einer bevorzugten Ausführungsform der Erfindung ist im Betriebszustand der gespannte und ggf. individuell spannbare Laufriemen (7.2) so geführt ist, dass er vor und hinter dem Antriebsrad (7.1) im Wesentlichen der gekrümmten Form der Riemenauflage (7.3) folgt und mit Ausnahme des Bereichs des Antriebrades (7.1) an der Riemenauflage weitgehend anliegt und an seinen Enden an dieser befestigt ist. Die Riemenauflage (7.3) kann beispielsweise an der Laufvorrichtung befestigt sein, sie kann aber auch ein integraler Bestandteil derselben sein.

In einer weiteren Ausführungsform der Erfindung weist der Rotations-Schwingungstilger eine Laufvorrichtung (1) auf, welche mindestens eine gekrümmte Laufschiene (1.1) umfasst, auf der das mindestens eine Laufrad (2.1) des Fahrwerks (2) sich entsprechend der angreifenden Schwingungskräfte bewegt, wobei die mindestens eine Laufschiene (1.1) an ihren beiden Enden eine Anschlagvorrichtung (1.2) aufweist, die mit einem am oder im Fahrwerk (2) angebrachten, vorzugsweise kegelförmigen, elastischen Lager (3.4) interagiert, sobald dieses in den Bereich der Anschlag-Vorrichtung der Laufschiene gelangt. Die Anschlagvorrichtung (1.2) umfasst dabei in einer Ausführungsform der Erfindung einen hydraulischen Bremszylinder (3), welcher einen elastischen Bremskegel (3.2) aufweist, der passgenau in das Fahrwerk (1) eingreift, sobald das Fahrwerk den Anschlagbereich erreicht. Des Weiteren kann die besagte Anschlagvorrichtung mindestens ein Gelenk (3.1) aufweisen, so dass der Bremszylinder der Winkeländerung (3a, 3b) des Fahrwerks bei Bewegung auf der gekrümmten Bahn folgen kann.

In einer besonderen Ausführungsform der Erfindung umfasst der erfindungsgemäße Rotations-Schwingungstilger mindestens eine zusätzliche Vorrichtung zur Dämpfung von Schwingungen, beispielsweise einen Wirbelstromdämpfer (8), der vorzugsweise im Bauteil der Rotationsschwungmasse (6) untergebracht und wirksam ist.

Ein geeigneter Wirbelstromdämpfer ist im Detail beispielsweise in der WO 2017/036581 beschrieben als Teil der Rotationsschwungmasse. Der Wirbelstromdämpfer (8) umfasst dabei eine aus Permanentmagneten bestehenden Magnetanordnung (8.1) und eine elektrische Leiterscheibe (8.2), wobei Leiterscheibe und Magnetanordnung sich gegenüberliegen und durch einen Luftspalt (8.3) voneinander getrennt und so angeordnet und befestigt sind, dass sie durch Drehung der Rotationsschwungmasse (6) relativ zueinander bewegbar sind. Dabei kann entweder die mitrotierende Magnetanordnung (8.1) am Umfang des rotierenden Schwungrades bzw. der Schwungmasse (6) angeordnet und die nicht-rotierende Leiterscheibe (8.2) zwischen gegenüberliegender Magnetanordnung (8.1) und Rotationsschwungmasse (6) angebracht sein, oder die mitrotierenden elektrische Leiterscheibe (8.2) ist am Umfang der scheibenförmigen Rotationsschwungmasse (6) angeordnet oder ist selbst die Leiterscheibe, und die gegenüberliegende Magnetanordnung (8.1) ist auf einer nicht-mitrotierenden Platte (8.4) angeordnet, welche sich zwischen mitrotierender Leiterscheibe und Rotationsschwungmasse befindet.

Der erfindungsgemäße Rotations-Schwingungstilger ist insbesondere für Dämpfung von Schwingungen von Bauwerken oder Maschinenanlagen mit einer Eigenfrequenz von < 10 Hertz, vorzugsweise < 5 Hz, insbesondere < 1Hz vorgesehen, wie sie insbesondere in Windkraftanlagen oder auch anderen hohen schlanken Bauwerken oder Anlagen auftreten können.

### Einzelheiten der Erfindung und Beschreibung der Ausführungsformen

Das Prinzip des dieser Erfindung zugrunde liegenden Rotations-Schwingungstilgers ist bereits ausführlich in der WO 2017/036581 beschrieben.

Eine rotierende Masse speichert kinetische Energie die proportional dem Trägheitsmoment der drehenden Masse ist. Durch Veränderung des Betrages der rotierenden Masse kann die Eigenfrequenz verändert und eingestellt werden. Durch Zugabe von Masse auf die Rotationsscheibe wird die Frequenz verringert. Im Gegensatz hierzu wird bei den bekannten Pendeltilgern die Frequenzänderung durch Änderung der Hauptmasse bewerkstelligt.

In klassischen Schwingungstilgern, insbesondere Pendeltilgern, die in Türmen oder hohen Bauwerken Einsatz finden, können Schwingwege von etwa nur 300 - 500 mm erreicht werden, da ansonsten die notwendige Tilgermasse übermäßig groß gewählt werden müsste, was letztlich zu unerwünschten Eigenschaften führt.

Durch den Einsatz eines Rolltilgers, wie den hier vorgestellten, können aber Schwingwege von mehr als 3000 - 5000 mm realisiert werden. Dies bedeutet, dass bei etwa 10 - fachen Schwingweg die erforderliche Masse auf etwa 1/10 reduziert werden kann, was per se ein Vorteil ist. Die Rotationsschwungmasse weist dabei eine ggf. veränderbare rotierende Masse auf, die in Abhängigkeit vom Durchmesser der rotierenden Masse oder vom Durchmesser des Massenschwerpunktes des Massenteils 1% - 30% der Tilger-Hauptmasse (5) entspricht. Durch Einsatz eines solchen Tilgers ist es erfindungsgemäß möglich, eine Frequenzänderung der Eigenschwingung um bis zu 30%, vorzugsweise bis 20%, insbesondere bis 10 oder 15% vorzunehmen, je nach gewählter Rotationsmasse bzw. Trägheitsmoment sowie anderen konstruktiven Eigenschaften dieser rotierenden Masse.

Die hier beschriebenen Rotations-Schwingungstilger sind hervorragend geeignet, Schwingungen unter 10 Hz, insbesondere unter 5 Hz, 1 Hz, bis zu etwa 0.5 Hz, vorzugsweise zwischen 1 Hz und 0.25 Hz zu dämpfen. Dabei kann die Frequenz um etwa 10 - 35%, insbesondere um etwa 20 - 30% geändert werden, wobei die Frequenzeinstellung sehr exakt und in kleinen Schritten vorgenommen werden kann. Dabei sind nur kleine Massen notwendig, die etwa 1/20 bis 1/4, vorzugsweise etwa 1/10 der schwingenden Hauptmasse betragen, was ein deutlicher Vorteil gegenüber vergleichbaren klassischen Schwingungstilger ohne Rotationsschwungmasse ist. So kann in dem erfindungsgemäßen Rolltilger, mit beispielsweise einer Laufvorrichtung von 2.5 m - 3.5 m Länge für die bewegten Massen, die Frequenz einer schwingende Hauptmasse von beispielsweise 250 kg mit einer Rotationsmasse von ca. 65 kg und einem Durchmesser von 0.25m um 20 - 30% verändert werden. Bei einem Durchmesser der Rotationsmasse von z.B. 0.5 m ist für den gleichen Effekt lediglich eine Rotationsmasse von rund 15 kg notwendig, und bei einem Durchmesser von 0.75 m eine Rotationsmasse von etwa 7 kg.

Die neuen Rotations-Schwingungstilger gemäß der vorliegenden Erfindung, welche auf den betreffenden Tilgern der WO 2017/036581 aufbauen, sind in den Abbildungen 1 - 4 dargestellt.

Die Rotationsschwungmasse (6) umfasst in der Regel ein Schwungrad (beispielsweise aus leichterem Material wie Kunststoff oder Aluminium), welches eine zentrale Welle oder Achse aufweist, die mit dem Antriebsrad (7.1) verbunden ist. Die Achse oder Welle des Schwungrades und damit der Rotationsmasse ist so ausgerichtet, dass die Ebene des Rades weitgehend parallel zu den anderen Laufrädern (2.1) auf der Laufvorrichtung (1) angeordnet ist, so dass im optimalen Fall die Drehrichtung der Rotationsmasse der Richtung der Laufvorrichtung und damit der Richtung des Fahrwerks entspricht.

Im Gegensatz zu der WO 2017/036581 ist, wie in Fig. 1 dargestellt, dass mindestens eine Antriebsrad (7.1) kein Bestandteil der Laufräder des Fahrwerks und läuft somit nicht auf der eigentlichen gekrümmten Laufvorrichtung (1) bzw. deren Schiene oder Schienen (1.1), sondern bewegt und dreht sich getrennt - ausgelöst durch schwingungsbedingte Bewegung des Fahrwerks (2) der Anlage (beispielsweise einer Windkraftanlage) - auf einer separaten Riemenantriebsvorrichtung (7) unterhalb der gekrümmten Laufvorrichtung (1). Es findet somit erfindungsgemäß eine Entkopplung des Antriebes des Fahrwerkes (2)(2.1) auf der Laufvorrichtung (1)(1.1) vom Antrieb (7.1) der Rotationsschwungmasse statt.

Während das Fahrwerk (2) mit seinen Laufrollen (2.1) zusammen mit der an ihm befestigten Hauptmasse (5) des Tilgers auf der Laufvorrichtung sich hin und her bewegen kann, wird die Rotationsschwungmasse davon unabhängig vom Antriebsrad (7.1) der Riemenvorrichtung (7) angetrieben.

Das Antriebsrad (7.1) dreht sich dabei um eine Welle, die mit der Rotationsschwungmasse (6) bzw. der Tilgerhauptmasse (5) in Verbindung steht und die am Fahrwerk (2) bzw. der Hauptmasse gelagert ist. Dadurch bewegt sich die Rotationsschwungmasse entlang der Riemenantriebsvorrichtung (7) zusammen mit dem Fahrwerk(2) entlang der gekrümmten Laufvorrichtung (1), wobei die Riemenantriebsvorrichtung unterhalb und entlang der gekrümmten Laufvorrichtung über deren Länge angebracht ist.

So entsteht ein zusätzlich zur Tilgerhauptmasse und deren Dämpfung hinzukommendes durch die rotierende Masse erzeugtes Trägheitsmoment, welches zur Dämpfung und deren variabler Feineinstellung beiträgt. Antriebsrad (7.1) und Rotationsschwungmasse (6) können auch über ein Getriebe miteinander verbunden sein, welches die Drehzahl der Rotationsmasse vergrößert, sodass nur ein geringeres Massenträgheitsmoment zur Frequenzanpassung erforderlich ist.

Die Riemenantriebsvorrichtung (7) umfasst neben dem erwähnten mindestens einen Antriebsrad (7.1) in einer Ausführungsform der Erfindung im Wesentlichen einen Laufriemen (7.2) aus hierfür üblichen Materialien, eine Riemenbefestigung vorzugsweise mit einer Spanneinrichtung zum Spannen des Riemens, sowie einen Riemenauflagebogen (7.3) mit gleicher oder ungefähr gleicher Krümmung, welche konzentrisch zur der Krümmung der Laufvorrichtung (1) verläuft, so dass der Riemenauflagebogen vorzugsweise unmittelbar auf der gekrümmten Fläche der Laufvorrichtung anliegt und mit dieser befestigt ist oder ein integraler Bestandteil der Laufvorrichtung ist.

In einer vereinfachten Ausführungsform der Erfindung kann auf den Riemenauflagebogen verzichtet werden, wenn auf Grund der Gestaltung und Form der Laufvorrichtung (1) und Anordnung der Riemenantriebsvorrichtung (7) sich der Laufriemen (7.2) direkt an die Unterseite der Laufvorrichtung anlegen kann.

In einer weiteren Ausführungsform der Erfindung weist die Riemenantriebsvorrichtung (7) eine Umlenkeinheit (7.4) für den Antriebsriemen (7.2) auf, welche in der Regel zwei oder mehr Umlenkrollen (7.4.1) umfasst, die um Wellen laufen, welche am Fahrwerk befestigt sind. Die Umlenkeinheit soll sicherstellen, dass der Laufriemen (7.2) über den größten Teil des Laufweges entlang dem gekrümmten Riemenauflagebogen (7.3) geführt wird mit Ausnahme des unmittelbaren Bereiches links und rechts vom Antriebsrad (7.1).

Die Umlenkeinheit (7.4) kann auch eine Vorrichtung zum Spannen des Laufriemens (7.2) aufweisen, mit welcher letzterer vor- und nachgespannt werden kann.

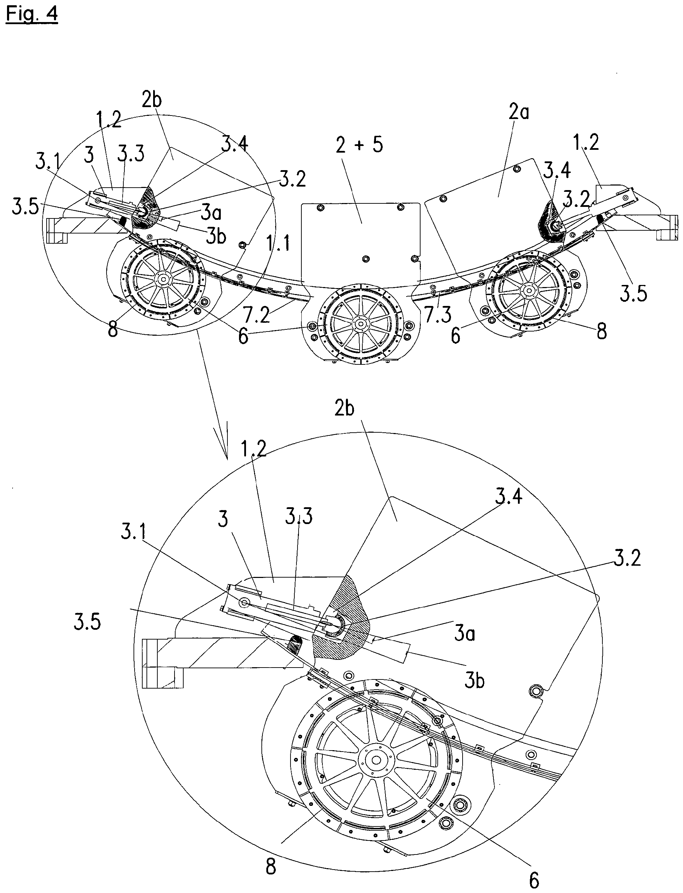

Die erfindungsgemäße Laufvorrichtung (1) entspricht im Wesentlichen der in der WO 2017/036581 offenbarten Vorrichtung, besitzt aber zusätzlich noch spezielle End-Anschläge (1.2), die in Fig. 4 näher erläutert werden.

Vorzugsweise weist die Laufvorrichtung zwei parallel geführte Laufschienen (1.1) auf, und das Fahrwerk( 2) ist mit einem, zwei, drei vier oder mehreren Laufrädern (2.1) auf beiden Schienen ausgestattet, die das Fahrwerk mit Tilgerhauptmasse (5) und Rotationsschwungmasse (6) führen und entlasten. Die Laufschienen können auch durch Laufrohre ersetzt sein.

Bei einer andere Ausführungsform der Erfindung (Fig. 4) hat das Fahrwerk auf beiden Seiten in der Höhe und Richtung der End-Anschläge, vorzugsweise kegelförmige Vertiefungen (3.4), in welche der jeweilige End-Anschlag (1.2) eintauchen kann. Diese Vertiefungen sind in einer erfindungsgemäßen Ausführungsform mit elastischen Material ausgekleidet, so dass der entsprechend geformte Kegel des Endanschlags, welcher ebenfalls elastisch sein kann, abgefedert wird.

In einer weiteren Ausführungsform der End-Anschläge (1.2) stellen diese hydraulische Bremszylinder (3) mit Bremskolben (3.3) und Bremszylinder-Kegel (3.2) dar, wobei letzterer in die entsprechend geformte Vertiefung im Fahrwerk eintaucht.

Es ist wegen der gekrümmten Bahn zweckmäßig oder auch notwendig, die End-Anschläge gelenkig zu machen, damit eine optimale Abbremsung und Führung des Fahrwerks erfolgen kann. Neben einem Gelenk für den Bremskolben(3.3) kann auch ein Gelenk für den Bremszylinder-Kegel (3.2) vorgesehen werden, so dass unterschiedliche Winkel (3a)(3b) bedient und eingestellt werden können.

In einer speziellen Ausführungsform der Erfindung weist der erfindungsgemäße Rotations-Schwingungsdämpfer eine zusätzliche Dämpfungseinrichtung auf, welche vorzugsweise im Schwungrad der Rotationsschwungmasse eingebaut sein kann, bzw. einen weiteren funktionellen Teil der Schwungmasse selbst darstellt.

Als besonders vorteilhaft und einfach hat sich eine Wirbelstromdämpfungseinrichtung (8) erwiesen, wie sie auch schon in der WO 2017/036581 offenbart und ausführlich beschrieben wurde. Dabei wird entweder das Schwungrad der Rotationsschwungmasse beispielsweise am Außendurchmesser mit Permanentmagneten bestückt und gleichzeitig wird eine elektrische Leiterscheibe, z.B. aus Aluminium oder Kupfer auf einer nicht rotierenden Stahlplatte befestigt, die z.B. Teil der schwingenden Masse ist. Es ist aber auch umgekehrt möglich, das rotierende Schwungrad selbst aus Aluminium oder Kupfer oder entsprechenden Legierungen zu fertigen und die Magnete am Außendurchmesser oder kreisförmig im Umfang einer fest-montierten nicht rotierenden Platte zu befestigen, welche beispielsweise zwischen dem Schwungrad und der Rotationsmasse angebracht ist. Durch das Vorbeigleiten der Magnete über der Aluminiumplatte, bzw. umgekehrt, wird ein Widerstandsmoment erreicht, was zu einer Dämpfung führt, die Temperatur unabhängig ist. Zur Feinabstimmung kann auf der Antriebswelle eine Einstellvorrichtung vorgesehen werden, mit welcher das Schwungrad axial verschoben werden kann und damit der Luftspalt zur exakten Dämpfungseinstellung verändert werden kann.

Eine weitere Möglichkeit die Dämpfung zu realisieren sind ebenfalls Magnete am Schwungrad, welche vor einer stationär angebrachten zum Ende hin breiter werdenden Aluminiumplatte laufen, die an der Laufvorrichtung angebracht ist. Mit der immer breiter werdenden Aluminiumplatte wird die von den Magneten überstrichene Fläche größer wodurch sich die Dämpfung vergrößert. Das bewirkt eine zum Ende des Schwingweges progressive Dämpfung.

Im Folgenden werden die Bezugsgrößen in den Abbildungen und im Text sowie die Zeichnungen selbst, näher erläutert.
- 1: Laufvorrichtung
1.1 Laufschiene
1.2 Anschlage auf beiden Seiten der Laufschiene
- 2: Fahrwerk
2.1 Laufrollen Fahrwerk
2a Fahrwerk vor Beginn Anschlag
2b Fahrwerk voll im Anschlag ausgelenkt
- 3: Bremszylinder an Anschlägen 1.2
3.1 Gelenk Bremszylinder
3.2 Bremszylinder-Kegel
3.3 Bremskolben
3a Einstellwinkel Bremszylinder-Kegel
3b Einstellwinkel Bremszylinder
3.4 Kegel Eintauchvertiefung für Bremszylinder in Fahrwerk 2
- 5: Tilgerhauptmasse (am Fahrwerk 2)
- 6: Rotationsschwungmasse
- 7: Riemenantriebsvorrichtung
7.1 Antriebsrad/-rolle für Rotationsschwungmasse 6
7.2 Laufriemen
7.3 Riemenauflagebogen
7.4 Umlenkeinheit
7.4.1. Umlenkrollen / Umlenkräder
- 8: Wirbelstromdämpfer
8.1. Magnetanordnung
8.2. Leiteranordnung
8.3 Luftspalt
8.4 Platte für Halterung Magnetanordnung

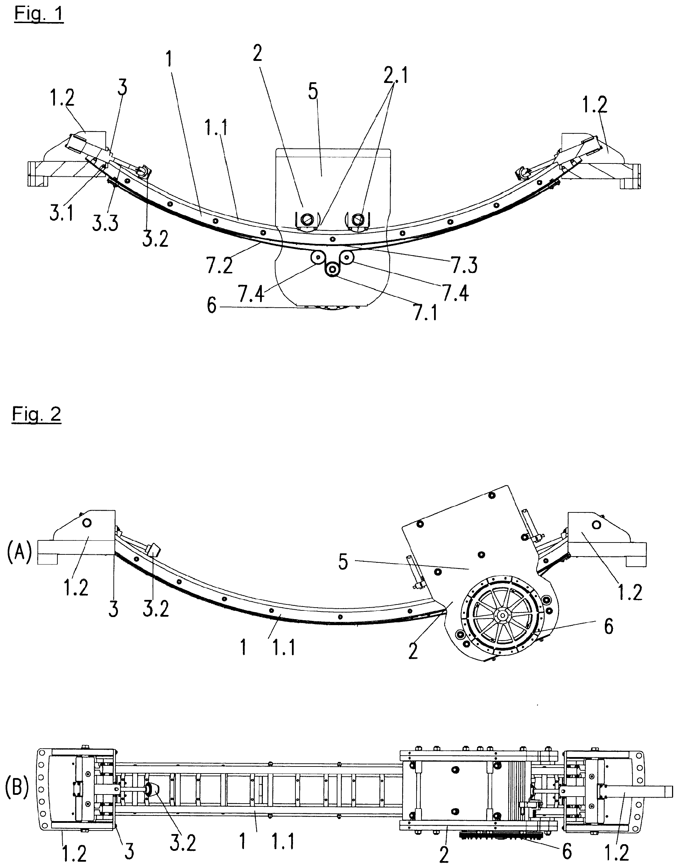

Fig. 1 stellt einen Schnitt dar, in dem die Lenkeinheit (7.4) mit dem Antriebsrad (7.1) gezeigt wird. Die Rotationsschwungmasse (6) liegt hinter der gezeigten Ansicht.
Fig. 2A stellt den erfindungsgemäßen Rotations-Schwingungstilger von der Seite mit Sicht auf die Rotationsschwungmasse (6) dar, wobei sich das Fahrwerk plus Tilgermassen am rechten Anschlagpunkt (1.2) der Laufvorrichtung (1) befindet.
Fig. 2B zeigt den gleichen Schwingungstilger von oben.

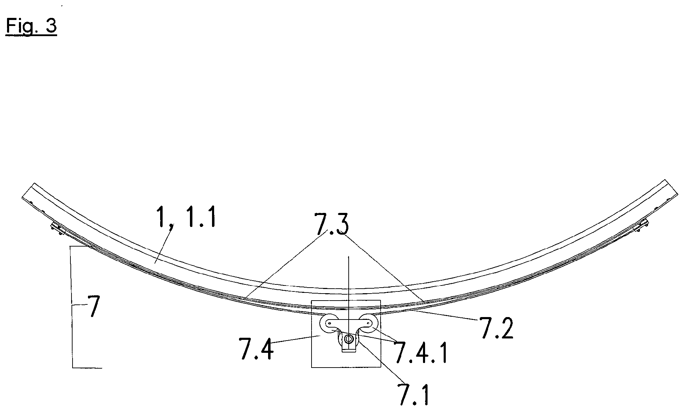

Fig. 3 zeigt eine spezielle Umlenkeinheit mit Spannvorrichtung (Fahrwerk mit Rotationsschwungmasse und Tilgerhauptmasse sind hier weggelassen).
Fig. 4 zeigt eine Sicht des erfindungsgemäßen Rotations-Schwingungstilgers gemäß Fig. 2, wobei drei mögliche Positionen des Fahrwerks bzw. der Tilgermassen dargestellt sind: den Durchlauf durch den Scheitelpunkt der gekrümmten Laufbahn (1.1), sowie die Positionen an den beiden End-Anschlägen (1.2) an den beiden Enden der Laufvorrichtung (1).

## Patentansprüche

1. Variabel an eine Störfrequenz anpassbarer Schwingungstilger einsetzbar in Windkraftanlagen, Bauwerken, Maschinen der Anlagen mit vergleichbarer Schwingungscharakteristik, umfassend ein mit Laufrädern oder Laufrollen (2.1) ausgestattetes Fahrwerk (2), eine Tilger-Hauptmasse (5) und eine Laufvorrichtung (1), wobei
- die Tilger-Hauptmasse (5) am Fahrwerk angebracht ist oder integraler Bestandteil des Fahrwerks ist,
- die Laufvorrichtung (1) für das Fahrwerk (2) im Wesentlichen in der Weise kreisförmig oder konkav gekrümmt ist, dass das Fahrwerk bzw. die Tilger-Hauptmasse (5) auf dieser Laufvorrichtung aus einer Mittellage oder Scheitelpunktlage heraus bewegbar und verlagerbar ist entsprechend den die Bewegungen auslösenden, in Richtung der Laufvorrichtung wirksamen Schwingungskräften,
- das Fahrwerk (2) bzw. die Tilger-Hauptmasse (5) mindestens eine scheibenförmige, rotationssymmetrische angetriebene Rotationsschwungmasse (6) mit einer Rotationsachse senkrecht zur Ebene der Kreisbahn der Laufvorrichtung aufweist, und sich zusammen mit der Tilger-Hauptmasse (5) bewegt, und
- die mindestens eine Rotationsschwungmasse (6) mindestens eine rotierende Massenscheibe umfasst und eine Rotationsrichtung aufweist, die im Wesentlichen der jeweiligen Richtung des bewegten Fahrwerks entlang der Laufvorrichtung entspricht, **dadurch gekennzeichnet, dass** die scheibenförmige Rotationsschwungmasse (6) von einer Riemenantriebsvorrichtung (7) ohne wirksame Beteiligung der Laufräder oder Laufrollen (2.1) des Fahrwerks (2) angetrieben wird, wobei die Riemenantriebsvorrichtung unterhalb der Laufvorrichtung (1) angebracht ist und der Schwerpunkt der mit der Riemenantriebsvorrichtung verbundenen Rotationsschwungmasse (6) unterhalb der Laufvorrichtung (1) liegt.

2. Rotations-Schwingungstilger nach Anspruch 1, **dadurch gekennzeichnet, dass** die Riemenantriebsvorrichtung (7) einen gespannten Laufriemen (7.2), mindestens ein Antriebsrad (7.1) und eine Riemenauflage (7.3) umfasst, die im Wesentlichen konzentrisch zur Krümmung der Laufvorrichtung (1) verläuft und unterhalb derselben über ihre gesamte Länge angebracht ist, wobei die Rotationsschwungmasse (6) durch das Antriebsrad (7.1) angetrieben wird, welches sich auf dem Laufriemen (7.2) unterhalb der Riemenauflage (7.3) entsprechend der über die Laufräder oder Laufrollen (2.1) bewerkstelligten Bewegung des Fahrwerks (2) auf der Laufvorrichtung (1) zusammen mit der Rotationsschwungmasse hin und her bewegt.

3. Rotations-Schwingungstilger nach Anspruch 2, **dadurch gekennzeichnet, dass** im Betriebszustand der gespannte Laufriemen (7.2) so geführt ist, dass er vor und hinter dem Antriebsrad (7.1) im Wesentlichen der gekrümmten Form der Riemenauflage (7.3) folgt und mit Ausnahme des Bereichs des Antriebrades (7.1) an der Riemenauflage weitgehend anliegt und an seinen Enden an dieser befestigt ist.

4. Rotations-Schwingungstilger nach Anspruch 2 oder 3, **dadurch gekennzeichnet, dass** die Riemenauflage (7.3) an der Laufvorrichtung befestigt ist oder eine integraler Bestandteil derselben ist.

5. Rotations-Schwingungstilger nach einem der Ansprüche 2 - 4, **dadurch gekennzeichnet, dass** der Laufriemen (7.2) über eine Umlenkeinheit (7.4) auf beiden Seiten des Antriebsrades (7.1) geführt ist und ggf. über eine Spannvorrichtung verfügt.

6. Rotations-Schwingungstilger nach Anspruch 5 **dadurch gekennzeichnet, dass** die Umlenkeinheit (7.4) spannbar ist.

7. Rotations-Schwingungstilger nach Anspruch 5 oder 6, **dadurch gekennzeichnet, dass** die Umlenkeinheit (7.4) mindestens zwei Umlenkrollen (7.4.1) und eine Halterung umfasst.

8. Rotations-Schwingungstilger nach einem der Ansprüche 1 - 7, **dadurch gekennzeichnet, dass** die Laufvorrichtung (1) mindestens eine gekrümmte Laufschiene (1.1) umfasst, auf der das mindestens eine Laufrad oder eine Laufrolle (2.1) des Fahrwerks (2) sich entsprechend der angreifenden Schwingungskräfte bewegt, wobei die mindestens eine Laufschiene (1.1) an ihren beiden Enden eine Anschlag-Vorrichtung (1.2) aufweist, die mit einem am oder im Fahrwerk (2) angebrachten Lager (3.4) interagiert, sobald dieses in den Bereich der Anschlag-Vorrichtung gelangt.

9. Rotations-Schwingungstilger nach Anspruch 8, **dadurch gekennzeichnet, dass** die Anschlagvorrichtung (1.2) einen hydraulischen Bremszylinder (3) umfasst welcher einen elastischen Bremskegel (3.2) aufweist, der passgenau in das Lager (3.4) im Fahrwerk (1) eingreift, sobald das Fahrwerk den Anschlagbereich erreicht.

10. Rotations-Schwingungstilger nach Anspruch 9, **dadurch gekennzeichnet, dass** die Anschlagvorrichtung mindestens ein Gelenk (3.1) aufweist, so dass der Bremszylinder der Winkeländerung (3a, 3b) des Fahrwerks bei Bewegung auf der gekrümmten Bahn folgen kann.

11. Rotations-Schwingungstilger nach einem der Ansprüche 1 -10, **dadurch gekennzeichnet, dass** er eine zusätzliche Vorrichtung zur Dämpfung von Schwingungen aufweist.

12. Rotations-Schwingungstilger nach Anspruch 11, **dadurch gekennzeichnet, dass** die zusätzliche Vorrichtung ein Wirbelstromdämpfer (8) ist, der im Bauteil der Rotationsschwungmasse (6) untergebracht und wirksam ist.

13. Rotations-Schwingungstilger nach Anspruch 12, **dadurch gekennzeichnet, dass** der Wirbelstromdämpfer (8) eine aus Permanentmagneten bestehenden Magnetanordnung (8.1) und eine elektrische Leiterscheibe (8.2) umfasst, wobei Leiterscheibe und Magnetanordnung gegenüberliegend durch einen Luftspalt (8.3) getrennt und so angeordnet und befestigt sind, dass sie durch Drehung der Rotationsschwungmasse (6) relativ zueinander bewegbar sind.

14. Rotations-Schwingungstilger nach Anspruch 13, **dadurch gekennzeichnet, dass**
(a) die mitrotierende Magnetanordnung (8.1) am Umfang des rotierenden Schwungrades bzw. der Schwungmasse (6) angeordnet ist und die nicht-rotierende Leiterscheibe (8.2) zwischen gegenüberliegender Magnetanordnung (8.1) und Rotationsschwungmasse (6) angebracht ist, oder
(b) die mitrotierenden elektrische Leiterscheibe (8.2) am Umfang der scheibenförmigen Rotationsschwungmasse (6) angeordnet ist oder selbst die Leiterscheibe ist, und die gegenüberliegende Magnetanordnung (8.1) auf einer nicht-mitrotierenden Platte (8.4) angeordnet ist, welche sich zwischen mitrotierender Leiterscheibe und Rotationsschwungmasse befindet.

15. Windkraftanlage umfassend mindestens einen Rotations-Schwingungstilger gemäß einem der Ansprüche 1 - 14.

## Claims

1. Tuned mass damper, which can be variably adapted to an interference frequency and used in wind turbines, buildings, and turbine machinery having comparable vibration characteristics, comprising a chassis (2) equipped with wheels or rollers (2.1), a mass-damper main mass (5), and a running device (1),
- the mass-damper main mass (5) being attached to the chassis or being an integral part of the chassis,
- the running device (1) for the chassis (2) being substantially circular or concavely curved such that the chassis or the mass-damper main mass (5) can be moved and displaced on this running device from a central position or apex position in accordance with the vibrational forces which trigger the movements acting in the direction of the running device,
- the chassis (2) or the mass-damper main mass (5) having at least one disk-shaped, rotationally symmetrical driven rotary flywheel mass (6), which has an axis of rotation perpendicular to the plane of the circular path of the running device, and moving together with the mass-damper main mass (5), and
- the at least one rotary flywheel mass (6) comprising at least one rotating mass disk and having a rotational direction that substantially corresponds to the relevant direction of the moved chassis along the running device, **characterized in that** the disk-shaped rotary flywheel mass (6) is driven by a belt drive device (7) without active involvement of the wheels or rollers (2.1) of the chassis (2), the belt drive device being attached underneath the running device (1) and the center of gravity of the rotary flywheel mass (6) which is connected to the belt drive device being below the running device (1).

2. Rotary tuned mass damper according to claim 1, **characterized in that** the belt drive device (7) comprises a tensioned running belt (7.2), at least one drive wheel (7.1), and a belt support (7.3) which extends substantially concentrically to the curvature of the running device (1) and is attached, over the entire length thereof, below said running device, the rotary flywheel mass (6) being driven by the drive wheel (7.1) which moves back and forth on the running belt (7.2) below the belt support (7.3) in accordance with the movement, brought about by the wheels or rollers (2.1), of the chassis (2) on the running device (1) together with the rotary flywheel mass.

3. Rotary tuned mass damper according to claim 2, **characterized in that**, in the operating state, the tensioned running belt (7.2) is guided such that it substantially follows the curved shape of the belt support (7.3) in front of and behind the drive wheel (7.1) and largely, with the exception of the region of the drive wheel (7.1), abuts the belt support and is attached thereto at the ends thereof.

4. Rotary tuned mass damper according to either claim 2 or claim 3, **characterized in that** the belt support (7.3) is fastened to the running device or is an integral part of said running device.

5. Rotary tuned mass damper according to any of claims 2 to 4, **characterized in that** the running belt (7.2) is guided over a deflection unit (7.4) on both sides of the drive wheel (7.1) and optionally has a tensioning device.

6. Rotary tuned mass damper according to claim 5, **characterized in that** the deflection unit (7.4) can be tensioned.

7. Rotary tuned mass damper according to either claim 5 or claim 6, **characterized in that** the deflection unit (7.4) comprises at least two deflection rollers (7.4.1) and a holder.

8. Rotary tuned mass damper according to any of claims 1 to 7, **characterized in that** the running device (1) comprises at least one curved running rail (1.1) on which the at least one wheel or roller (2.1) of the chassis (2) moves in accordance with the acting vibrational forces, the at least one running rail (1.1) having a stop device (1.2) at both ends, which stop device interacts with a bearing (3.4) attached to or in the chassis (2) as soon as it reaches the region of the stop device.

9. Rotary tuned mass damper according to claim 8, **characterized in that** the stop device (1.2) comprises a hydraulic brake cylinder (3) which has a resilient brake cone (3.2) that engages precisely in the bearing (3.4) in the chassis (1) as soon as the chassis reaches the stop region.

10. Rotary tuned mass damper according to claim 9, **characterized in that** the stop device has at least one joint (3.1) so that the brake cylinder can follow the change in angle (3a, 3b) of the chassis when moving on the curved path.

11. Rotary tuned mass damper according to any of claims 1 to 10, **characterized in that** it has an additional device for damping vibrations.

12. Rotary tuned mass damper according to claim 11, **characterized in that** the additional device is an eddy-current damper (8) which is housed in and acts in the component of the rotary flywheel mass (6).

13. Rotary tuned mass damper according to claim 12, **characterized in that** the eddy-current damper (8) comprises a magnet arrangement (8.1) consisting of permanent magnets and an electrical conductor disk (8.2), the conductor disk and magnet arrangement being separated from one another by an air gap (8.3) and thus arranged and fastened such that they can be moved relative to each other by rotating the rotary flywheel mass (6).

14. Rotary tuned mass damper according to claim 13, **characterized in that**
(a) the co-rotating magnet arrangement (8.1) is arranged on the circumference of the rotary flywheel mass or the flywheel (6) and the non-rotating conductor disk (8.2) is attached between the opposite magnet arrangement (8.1) and the rotary flywheel mass (6), or
(b) the co-rotating electrical conductor disk (8.2) is arranged on the circumference of the disk-shaped rotary flywheel mass (6) or is itself the conductor disk, and the opposite magnet arrangement (8.1) is arranged on a non-co-rotating plate (8.4) which is located between the co-rotating conductor disk and the rotary flywheel mass.

15. Wind turbine comprising at least one rotating tuned mass damper according to any of claims 1 to 14.

## Revendications

1. Amortisseur de vibrations adaptable de manière variable à une fréquence perturbatrice pouvant être utilisé dans des éoliennes, des bâtiments, des machines de systèmes comportant des caractéristiques de vibration comparables, comprenant un châssis (2) équipé de roues de roulement ou de galets de roulement (2.1), une masse principale d'amortisseur (5) et un dispositif de roulement (1), dans lequel
- la masse principale d'amortisseur (5) est fixée au châssis ou fait partie intégrante du châssis,
- le dispositif de roulement (1) pour le châssis (2) est sensiblement circulaire ou incurvé concave de telle sorte que le châssis ou la masse principale d'amortisseur (5) peut être déplacé(e) et transféré(e) sur ledit dispositif de roulement à partir d'une position centrale ou d'une position de sommet en fonction des forces de vibration qui déclenchent les déplacements et agissent en direction du dispositif de roulement,
- le châssis (2) ou la masse principale d'amortisseur (5) présente au moins une masse d'inertie de rotation (6) entraînée sous forme de disque à symétrie de révolution et comportant un axe de rotation perpendiculaire au plan de la trajectoire circulaire du dispositif de roulement, et se déplace conjointement avec la masse principale d'amortisseur (5), et
- l'au moins une masse d'inertie de rotation (6) comprend au moins un disque de masse rotatif et présente un sens de rotation qui correspond sensiblement au sens respectif du châssis mobile le long du dispositif de roulement, **caractérisé en ce que** la masse d'inertie de rotation (6) en forme de disque est entraînée à partir d'un dispositif d'entraînement par courroie (7) sans action effective des roues de roulement ou des galets de roulement (2.1) du châssis (2), le dispositif d'entraînement par courroie étant fixé sous le dispositif de roulement (1) et le centre de gravité de la masse d'inertie de rotation (6) reliée au dispositif d'entraînement par courroie se trouvant sous le dispositif de roulement (1).

2. Amortisseur de vibrations à rotation selon la revendication 1, **caractérisé en ce que** le dispositif d'entraînement par courroie (7) comprend une courroie de roulement (7.2) tendue, au moins une roue d'entraînement (7.1) et un support de courroie (7.3), s'étend sensiblement concentriquement à la courbure du dispositif de roulement (1) et est fixé en dessous de celui-ci sur toute sa longueur, la masse d'inertie de rotation (6) étant entraînée par la roue d'entraînement (7.1), laquelle se déplace d'avant en arrière, conjointement avec la masse d'inertie de rotation, sur la courroie de roulement (7.2) en dessous du support de courroie (7.3), en fonction du déplacement du châssis (2), provoqué par les roues de roulement ou les galets de roulement (2.1), sur le dispositif de roulement (1).

3. Amortisseur de vibrations à rotation selon la revendication 2, **caractérisé en ce que**, dans l'état de fonctionnement, la courroie de roulement (7.2) tendue est guidée de manière à épouser sensiblement la forme incurvée du support de courroie (7.3) devant et derrière la roue d'entraînement (7.1) et, à l'exception de la zone de la roue d'entraînement (7.1), repose largement contre le support de courroie et y est fixée à ses extrémités.

4. Amortisseur de vibrations à rotation selon la revendication 2 ou 3, **caractérisé en ce que** le support de courroie (7.3) est fixé au dispositif de roulement ou fait partie intégrante de celui-ci.

5. Amortisseur de vibrations à rotation selon l'une des revendications 2 à 4, **caractérisé en ce que** la courroie de roulement (7.2) est guidée des deux côtés de la roue d'entraînement (7.1) par l'intermédiaire d'une unité de déviation (7.4) et dispose éventuellement d'un dispositif de tension.

6. Amortisseur de vibrations à rotation selon la revendication 5, **caractérisé en ce que** l'unité de déviation (7.4) peut être tendue.

7. Amortisseur de vibrations à rotation selon la revendication 5 ou 6, **caractérisé en ce que** l'unité de déviation (7.4) comprend au moins deux rouleaux de déviation (7.4.1) et un élément de retenue.

8. Amortisseur de vibrations à rotation selon l'une des revendications 1 à 7, **caractérisé en ce que** le dispositif de roulement (1) comprend au moins un rail de roulement (1.1) incurvé, sur lequel se déplace l'au moins une roue de roulement ou un galet de roulement (2.1) du châssis (2) en fonction des forces de vibration appliquées, l'au moins un rail de roulement (1.1) présentant un dispositif d'arrêt (1.2) à ses deux extrémités, lequel interagit avec un palier (3.4) fixé au ou dans le châssis (2) dès qu'il arrive dans la zone du dispositif d'arrêt.

9. Amortisseur de vibrations à rotation selon la revendication 8, **caractérisé en ce que** le dispositif d'arrêt (1.2) comprend un cylindre de frein hydraulique (3) qui présente un cône de frein élastique (3.2), lequel vient en prise précisément dans le palier (3.4) dans le châssis (1) dès que le châssis atteint la zone d'arrêt.

10. Amortisseur de vibrations à rotation selon la revendication 9, **caractérisé en ce que** le dispositif d'arrêt présente au moins une articulation (3.1) de sorte que le cylindre de frein peut suivre le changement d'angle (3a, 3b) du châssis lors du déplacement sur la trajectoire incurvée.

11. Amortisseur de vibrations à rotation selon l'une des revendications 1 à 10, **caractérisé en ce qu'**il présente un dispositif supplémentaire permettant d'absorber des vibrations.

12. Amortisseur de vibrations à rotation selon la revendication 11, **caractérisé en ce que** le dispositif supplémentaire est un absorbeur de courants de Foucault (8) qui est logé et agit dans la partie structurale de la masse d'inertie de rotation (6).

13. Amortisseur de vibrations à rotation selon la revendication 12, **caractérisé en ce que** l'absorbeur de courants de Foucault (8) comprend un agencement d'aimants (8.1) constitué d'aimants permanents et un disque conducteur (8.2) électrique, le disque conducteur et l'agencement d'aimants étant séparés l'un de l'autre par un entrefer (8.3) et disposés et fixés de telle sorte qu'ils peuvent être déplacés l'un par rapport à l'autre en faisant tourner la masse d'inertie de rotation (6).

14. Amortisseur de vibrations à rotation selon la revendication 13, **caractérisé en ce que**
(a) l'agencement d'aimants (8.1) co-rotatif est disposé sur la circonférence du volant d'inertie rotatif ou de la masse d'inertie (6) rotative et le disque conducteur (8.2) non rotatif est fixé entre l'agencement d'aimants (8.1) opposé et la masse d'inertie de rotation (6), ou
(b) le disque conducteur (8.2) électrique co-rotatif est disposé sur la circonférence de la masse d'inertie de rotation (6) en forme de disque ou constitue lui-même le disque conducteur, et l'agencement d'aimants (8.1) opposé est disposé sur une plaque non co-rotative (8.4) qui est située entre le disque conducteur co-rotatif et la masse d'inertie de rotation.

15. Éolienne comprenant au moins un amortisseur de vibrations à rotation selon l'une des revendications 1 à 14.
